# EUROPEAN PATENT APPLICATION

(11) **EP 4 654 281 A1**
(43) Date of publication of application: **26.11.2025**
(21) Application number: 23933472.5
(22) Date of filing: 20.04.2023
(51) Int. Cl.: H01M 4/134, H01M 10/0525, H01M 4/13, H01M 4/139

(54) **SECONDARY BATTERY AND ELECTRIC DEVICE**

(71) Applicant: Contemporary Amperex Technology Co., Limited, Ningde, Fujian 352100 (CN)
(72) Inventor: SUN, Xin, Ningde, Fujian 352100 (CN); WU, Longsheng, Ningde, Fujian 352100 (CN); CHEN, Xingbu, Ningde, Fujian 352100 (CN); LI, Xuan, Ningde, Fujian 352100 (CN); WU, Lili, Ningde, Fujian 352100 (CN); DONG, Miaomiao, Ningde, Fujian 352100 (CN)
(74) Representative: Ziebig Hengelhaupt Intellectual Property Attorneys Patentanwaltskanzlei PartGmbB
(86) International application number: PCT/CN2023/089589
(87) International publication number: WO 2024/216596

(57) **Abstract**

The present application provides a secondary battery with a high compaction density and a high energy density. The secondary battery includes a negative electrode plate. The negative electrode plate includes a negative electrode active material. The negative electrode active material includes a first particle size material and a second particle size material. An average particle size D1 of the first particle size material and an average particle size D2 of the second particle size material satisfy: D2/D1≤0.6, and the first particle size material includes a silicon-carbon composite material. The silicon-carbon composite material includes a carbon matrix particle and a silicon-based material arranged inside the carbon matrix particle. According to the secondary battery, by the improvement of the structure of the silicon-carbon composite material and the cooperation between the first particle size material and the second particle size material, a mass energy density and the compaction density of the secondary battery are improved, thereby improving a volumetric energy density of the secondary battery, further reducing a resistance of the negative electrode plate, and improving rate performance of the secondary battery.

## Description

### TECHNICAL FIELD

The present application relates to the technical field of secondary batteries, and in particular to a secondary battery and a power consuming apparatus.

### BACKGROUND

**In** recent years, with the wide use of secondary batteries in energy storage power systems such as hydroelectric, thermal, wind, and solar power stations, and in many other fields such as electric tools, electric bicycles, electric motorcycles, electric vehicles, military equipment, and aerospace, an increasingly higher requirement is raised for the performance of secondary batteries in the market.

At present, with the improvement of endurance time or mileage of various power consuming apparatuses, an increasingly high requirement is raised for energy densities of secondary batteries. In order to obtain a higher energy density, a silicon-based material is usually used in a negative electrode active material, but the electrochemical performance of a battery can be affected.

### SUMMARY

The present application is disclosed in view of the above problems, and an objective of the present application is to provide a secondary battery. The secondary battery has a high energy density and good rate performance.

A first aspect of the present application provides a secondary battery, including a negative electrode plate. The negative electrode plate includes a negative electrode active material. The negative electrode active material includes a first particle size material and a second particle size material. An average particle size D1 of the first particle size material and an average particle size D2 of the second particle size material satisfy: D2/D1≤0.6, and the first particle size material includes a silicon-carbon composite material. The silicon-carbon composite material includes a carbon matrix particle and a silicon-based material arranged inside the carbon matrix particle.

The carbon matrix particle of the present application can provide more spaces for deposition of the silicon-based material, so as to accommodate more silicon-based materials. Since a specific capacity of the silicon-based material is relatively high, the silicon-carbon composite material of the present application can improve a capacity of the negative electrode active material, thereby increasing a mass energy density of the secondary battery. However, because the silicon-carbon composite material having an internal void structure has a large particle size, a compaction density of a negative electrode film layer decreases, and as a result, the energy density of the secondary battery decreases. In addition, a large number of pores existing between large particles may agglomerate a large number of binders and conductive agents, thereby affecting electrical contact between the particles, which causes an increase in a resistance of the negative electrode plate, and further affects rate performance of the secondary battery. In the present application, the second particle size material is introduced, and a relationship between the average particle size of the first particle size material and the average particle size of the second particle size material is further controlled to satisfy D2/D1≤0.6. When the above relationship is satisfied, the second particle size material can fill, to the largest extent, pores of the first particle size material, effectively increasing the compaction density of the negative electrode film layer, thereby increasing the energy density of the secondary battery. In addition, an increase in a contact area between particles also reduces the resistance of the negative electrode plate, and improves the rate performance of the secondary battery.

In any embodiment, D2/D1≤0.6-0.155 1nα, where α is a mass ratio of the first particle size material to the second particle size material, and α≥1.

In any embodiment, 3≤α≤9.

When the mass content of the silicon-carbon composite material increases, it is beneficial to increasing the mass energy density of the secondary battery. However, excessive silicon-carbon composite materials with large particle sizes can reduce the compaction density of the negative electrode film layer and reduce the contact area between the particles, increase the resistance of the negative electrode plate, and reduce the rate performance of the secondary battery. The applicant unexpectedly finds that when a gradation design relationship between an average particle size and mass of the first particle size material and an average particle size and mass of the second particle size material in the negative electrode active material satisfies the above relationship, the secondary battery has both a high compaction density and a high mass energy density, thereby achieving a higher volumetric energy density, lower resistance, and higher rate performance.

In any embodiment, 5 µm≤D1≤20 µm, optionally 5 µm≤D1≤15 µm.

When a particle size of the first particle size material is too large, a charge transfer resistance may be increased, the rate performance may be reduced, and the compaction density may also be affected. When the particle size of the first particle size material is too small, the silicon-based material contained in the silicon-carbon composite material may be reduced, thereby reducing the mass energy density of the secondary battery and also reducing the compaction density. Controlling the particle size of the first particle size material to be in a suitable range is beneficial to increasing the compaction density, reducing the resistance, and improving the rate performance of the secondary battery. In addition, the mass energy density and volumetric energy density of the secondary battery can also be improved.

In any embodiment, 1 µm≤D2≤10 µm, optionally 2 µm≤D2≤5 µm.

When a particle size of the second particle size material is too large, a charge transfer resistance may be increased, the rate performance may be reduced, and the compaction density may also be affected. When the particle size of the second particle size material is too small, initial efficiency and a capacity may be low. Controlling the particle size of the second particle size material to be in a suitable range is beneficial to increasing the compaction density, reducing the resistance, and improving the rate performance of the secondary battery. In addition, the mass energy density and volumetric energy density of the secondary battery can also be improved.

In any embodiment, a particle size distribution of the negative electrode active material satisfies: 0.9≤(Dv90-Dv10)/Dv50≤2.

In any embodiment, a particle size distribution of the first particle size material satisfies: (Dv₁90-Dv₁10)/Dv₁50≤2.0, optionally 1.2≤(Dv₁90-Dv₁10)/Dv₁50≤2.0. And/or, a particle size distribution of the second particle size material satisfies: (Dv₂90-Dv₂10)/Dv₂50≤1.6, optionally 0.9≤(Dv₂90-Dv₂10)/Dv₂50≤1.3.

When the particle size distributions of the negative electrode active material satisfy the above ranges, an overall particle size of the negative electrode active material is moderate, and the particle size distributions are uniform. This is beneficial to improving the uniformity of the overall performance of the negative electrode active material.

In any embodiment, an average length-to-width ratio R1 of the first particle size material is 1.2 to 2.5. And/or, an average length-to-width ratio R2 of the second particle size material is 1.2 to 3.0.

By controlling the average length-to-width ratio of the first particle size material and/or the second particle size material to be in a suitable range, particle shapes of both the first particle size material and the second particle size material can be controlled to be more regular, thereby increasing the compaction density of the negative electrode film layer.

In any embodiment, the carbon matrix particle includes a three-dimensional network crosslinked pore structure, and at least a portion of the silicon-based material is arranged in the three-dimensional network crosslinked pore structure.

The three-dimensional network crosslinked pore structure can provide more spaces for the silicon-based material, and can accommodate more silicon-based materials, thereby increasing the mass energy density of the secondary battery.

In any embodiment, a carbon element content of the silicon-carbon composite material has a decrease trend from a geometric center to an outer surface of the silicon-carbon composite material. And/or, a silicon element content of the silicon-carbon composite material has an increase trend from the geometric center to the outer surface of the silicon-carbon composite material.

In any embodiment, based on a total mass of the silicon-carbon composite material, the silicon element content is greater than or equal to 20%, optionally 20% to 60%. And/or, based on the total mass of the silicon-carbon composite material, the carbon element content is greater than or equal to 40%, optionally 40% to 70%. Based on the total mass of the silicon-carbon composite material, an oxygen element content is less than or equal to 10%, optionally 1% to 5%.

When the content of the silicon-based material attached in the carbon matrix particle in the present application satisfies the above range, the content of the silicon-based material is relatively high, which can significantly improve the capacity of the secondary battery, thereby increasing the mass energy density of the secondary battery. The content of the carbon matrix particle is moderate, so that a conductivity of the negative electrode active material can be improved, thereby reducing the resistance of the negative electrode plate.

In any embodiment, a mass content of the silicon-carbon composite material in the negative electrode active material is greater than or equal to 50%, optionally greater than or equal to 70%.

When the content of the silicon-carbon composite material is increased, it is beneficial to increasing the energy density of the secondary battery.

In any embodiment, the second particle size material includes a carbon-based material. Optionally, the carbon-based material includes one or more of graphite, hard carbon, soft carbon, porous carbon, or active carbon.

When the second particle size material includes the carbon-based material, a capability of transmitting ions of the negative electrode plate can be improved, and the rate performance of the secondary battery can be effectively improved.

In any embodiment, the negative electrode plate includes a negative electrode film layer. A compaction density of the negative electrode film layer is 1.2 g/cm³ to 1.6 g/cm³. Optionally, the compaction density of the negative electrode film layer is 1.3 g/cm³ to 1.6 g/cm³.

When the compaction density of the negative electrode film layer is increased, the volumetric energy density of the secondary battery can be significantly increased.

In any embodiment, a mass energy density of the secondary battery is 380 Wh/kg to 460 Wh/kg. Optionally, the mass energy density of the secondary battery is 400 Wh/kg to 460 Wh/kg. And/or, a volumetric energy density of the secondary battery is 650 Wh/L to 1000 Wh/L. Optionally, the volumetric energy density of the secondary battery is 700 Wh/L to 1000 Wh/L.

A second aspect of the present application provides a power consuming apparatus, including the secondary battery of the present application.

### BRIEF DESCRIPTION OF THE DRAWINGS

FIG. 1 is a schematic diagram of a negative electrode plate according to an embodiment of the present application;
FIG. 2 is a schematic diagram of a secondary battery according to an embodiment of the present application;
FIG. 3 is an exploded view of the secondary battery shown in FIG. 2 according to an embodiment of the present application;
FIG. 4 is a schematic diagram of a battery module according to an embodiment of the present application;
FIG. 5 shows a schematic diagram of a battery pack according to an embodiment of the present application;
FIG. 6 is an exploded view of the battery pack shown in FIG. 5 according to an embodiment of the present application; and
FIG. 7 is a schematic diagram of a power consuming apparatus using a secondary battery as a power source according to an embodiment of the present application.

### Descriptions of reference numerals:

1: battery pack; 2: upper box; 3: lower box; 4: battery module; 5: secondary battery; 51: case; 52: electrode assembly; 53: cover plate; 6: negative electrode plate; 61: first particle size material; 62: second particle size material; and 63: negative electrode current collector.

### DETAILED DESCRIPTION

Embodiments of a negative electrode plate, a secondary battery, and a power consuming apparatus of the present application are specifically disclosed in detail below appropriately with reference to detailed descriptions of the accompanying drawings. However, there may be situations where unnecessary detailed explanations are omitted. For example, there are situations where detailed explanations of well-known matters and repeated explanations of actually the same structure are omitted. Thus, the following descriptions do not become unnecessarily lengthy, which facilitates understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. The range defined in this way may include or exclude end values, and may be arbitrarily combined, that is, any lower limit can be combined with any upper limit to form a range. For example, if ranges of 60-120 and 80-110 are listed for a particular parameter, it is to be understood that ranges of 60-110 and 80-120 are also expected. In addition, if minimum range values 1 and 2 are listed, and maximum range values 3, 4 and 5 are listed, all of the following ranges can be expected: 1-3, 1-4, 1-5, 2-3, 2-4, and 2-5. In the present application, unless stated otherwise, the numerical range "a-b" represents an abbreviated representation of any combination of real numbers between a to b, where both a and b are real numbers. For example, the numerical range "0-5" means that all real numbers between "0 and 5" are listed herein, and "0-5" is merely an abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be performed in the order described or in a random order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

Unless otherwise specifically stated, "include" and "contain" mentioned in the present application indicate open inclusion or closed inclusion. For example, the terms "include" and "contain" may indicate that other components not listed may further be include or contained, or only listed components may be included or contained.

If not specifically stated, in the present application, the term "or" is inclusive. For example, the phrase "A or B" means "A, B, or both A and B". More specifically, any one of the following conditions satisfies the condition "A or B": A is true (or exist) and B is false (or not exist); A is false (or not exist) and B is true (or exist); or both A and B are true (or exist).

Due to a high capacity, silicon is widely used in a negative electrode active material to increase an energy density of a secondary battery. However, a large particle size of a high-silicon silicon-carbon composite material may reduce a compaction density of a negative electrode film layer, thus greatly reducing a volumetric energy density of the secondary battery. In order to solve the above problems, the applicant finds through continuous research that by introducing a second particle size material into a negative electrode active material, and especially, by controlling a relationship between an average particle size of the second particle size material and an average particle size of a silicon-carbon composite material, the compaction density of the negative electrode film layer can be increased, thus increasing the volumetric energy density of the secondary battery, reducing an electrode plate resistance, and improving rate performance of the secondary battery.

### [Secondary battery]

In view of this, the present application provides a secondary battery, including a negative electrode plate. The negative electrode plate includes a negative electrode active material. The negative electrode active material includes a first particle size material and a second particle size material. An average particle size D1 of the first particle size material and an average particle size D2 of the second particle size material satisfy: D2/D1≤0.6, and the first particle size material includes a silicon-carbon composite material. The silicon-carbon composite material includes a carbon matrix particle and a silicon-based material arranged inside the carbon matrix particle.

In some embodiments, the average particle size D1 of the first particle size material and the average particle size D2 of the second particle size material satisfy: D2/D1≤0.5, D2/D1≤0.4, D2/D1≤0.3, D2/D1≤0.25, D2/D1≤0.23, D2/D1≤0.2, D2/D1≤0.15, D2/D1≤0.14, D2≤0.13 or D2/D 1 may also be values within a range composed of any two of the above points.

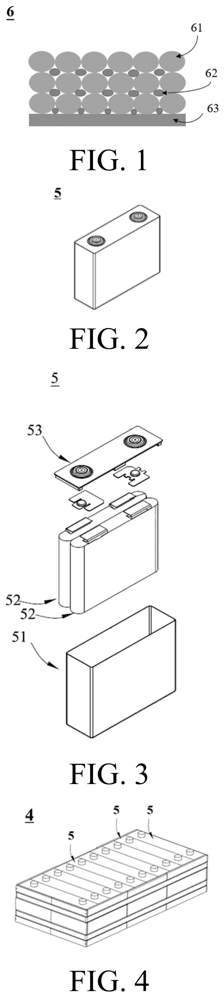

In some embodiments, referring to FIG. 1, the negative electrode plate 6 includes a first particle size material 61, a second particle size material 62, and a negative electrode current collector 63. The second particle size material fills pores of the first particle size material.

The average particle sizes of the first particle size material and the second particle size material are meanings well known in the art, and may be measured by using a method and device that are well known in the art. For example, reference may be made to operations in the following steps: Cut the negative electrode plate into a sample to be tested (for example, 6 mm×6 mm) with a specific size. Observe active particles on a surface of the electrode plate through a scanning electron microscope and perform statistical analysis on a particle size of the material through software Image J. Use a bimodal normal distribution curve for fitting. Respectively use a large particle size and a small particle size that correspond to two peak values as D1 and D2. An energy spectrometer is used to analyze material elements, which can further determine types of materials with small and large particle sizes.

In some embodiments, the carbon matrix particle includes a skeleton structure or a porous skeleton structure. At least a portion of the silicon-based material is attached into pores of a carbon skeleton. The silicon-based material may fill all or part of the pores of the carbon skeleton. The pores represent structures that are sunken relative to an outer surface of the negative electrode active material, or through holes that penetrate through the negative electrode active material. Compositions of each pore structure include a pore diameter, a pore length, a pore diameter distribution, and the like. The pores of the carbon matrix particle include at least one type of micropores, mesopores, and macropores. Generally, the micropores are pores with diameters less than about 2 nanometers. The mesopores are pores with diameters about 2 nanometers to about 5 nanometers. The macropores are pores with diameters greater than 50 nanometers.

Features of the pore structures of the silicon-carbon composite material in the negative electrode plate can be observed by using a method and a device that are well known in the art. For example, the negative electrode plate that contains the silicon-carbon composite material may be observed under a scanning electronmicroscope (such as ZEISS Sigma 300). For example, reference may be made to operations in the following steps: Take a negative electrode plate, and cut the negative electrode plate into a sample to be tested (for example, 6 mm × 6 mm) with a specific size. Sandwich the sample to be tested by using two electricity and heat conducting thin sheets (for example, copper foils). Stick and fix the sample to be tested with the copper foils by using an adhesive (for example, a double-sided adhesive tape), and press the sample to be tested and the copper foils by using a flat iron block with a specific mass (for example, 400 g) for specific time (for example, 1 h). Trim an edge with scissors, and adhere the sample to a sample stage having a conductive adhesive. Then, place and fix the sample stage on a sample stand. Power on and vacuumize (for example, at 10 Pa to 4 Pa) an argon ion section polisher (for example, IB-19500CP). Set an argon flow rate (for example, 0.15 Mpa), a voltage (for example, 8 KV), and polishing time (for example, 2 hours). Adjust the sample stage to a swinging mode to start polishing. After the polishing ends, obtain an ion polished section topographic image of the sample to be tested by using a scanning electronmicroscope (for example, ZEISS SIG300).

In some embodiments, a particle size of the silicon-based material is at nanometer level. During deposition of the silicon-based material, it is easier to uniformly attach a nano silicon-based material to the interior of the carbon matrix particle.

A resistance of the negative electrode plate may be measured by using a method and a device that are well known in the art. For example, a resistance meter may be used for measurement. For example, reference may be made to operations in the following steps: Respectively cut the negative electrode plate to form small round plates with specific diameters (for example, 20 mm) in left, middle, and right portions of the negative electrode plate. Turn on an indicator lamp of an electrode plate resistance meter, place the small round plates at proper positions of a "probe" of a membrane resistance meter, and read data after readings are stable. Test two positions on each small round plate, and calculate an average value of data measured for six times finally as an electrode plate resistance of the electrode plate.

The carbon matrix particle of the present application can provide more spaces for deposition of the silicon-based material, so as to accommodate more silicon-based materials. Since a specific capacity of the silicon-based material is relatively high, the silicon-carbon composite material of the present application can improve a capacity of the negative electrode active material, thereby increasing a mass energy density of the secondary battery. However, because the silicon-carbon composite material having an internal void structure has a large particle size, a compaction density of a negative electrode film layer decreases, and as a result, the energy density of the secondary battery decreases. In addition, a large number of pores existing between large particles may agglomerate a large number of binders and conductive agents, thereby affecting electrical contact between the material particles, which causes an increase in a resistance of the negative electrode plate, and further affects rate performance of the secondary battery. In the present application, the second particle size material is introduced, and a relationship between the average particle size of the first particle size material and the average particle size of the second particle size material is further controlled to satisfy D2/D1≤0.6. When the above relationship is satisfied, the second particle size material can fill, to the largest extent, pores of the first particle size material, thereby effectively increasing the compaction density of the negative electrode film layer and the mass energy density of the secondary battery, and then increasing the energy density of the secondary battery. In addition, an increase in a contact area between particles also reduces the resistance of the negative electrode plate, thereby improving the rate performance of the secondary battery.

In some embodiments, D2/D1≤0.6-0.155 lnα, where α is a mass ratio of the first particle size material to the second particle size material, and α≥1.

In some embodiments, 3≤α≤9.

In some embodiment clocks, α may be 1, 2, 3, 4, 5, 6, 7, 8, 9, or a value in a range composed of any two of the above points.

Masses of the first particle size material and the second particle size material may be measured by using a method and device that are well known in the art. For example, the negative electrode active material is sifted through a sieve to respectively obtain the first particle size material and the second particle size material, and then the masses of the first particle size material and the second particle size material may be obtained by weighing the materials.

When the mass content of the silicon-carbon composite material increases, it is beneficial to increasing the mass energy density of the secondary battery. However, excessive silicon-carbon composite materials with large particle sizes can reduce the compaction density of the negative electrode film layer and reduce the contact area between the particles, increase the resistance of the negative electrode plate, and reduce the rate performance of the secondary battery. The applicant unexpectedly finds that when a gradation design relationship between an average particle size and mass of the first particle size material and an average particle size and mass of the second particle size material in the negative electrode active material satisfies the above relationship, the secondary battery has both a high compaction density and a high mass energy density, thereby achieving a higher volumetric energy density, lower resistance, and higher rate performance.

In some embodiments, 5 µm≤D1≤20 µm, optionally 5 µm≤D1≤15 µm.

In some embodiments, D1 may be 5 µm, 6 µm, 7 µm, 8 µm, 9 µm, 10 µm, 11 µm, 12 µm, 13 µm, 14 µm, 15 µm, 18 µm, 20 µm, or a value in a range composed of any two of the above points.

When a particle size of the first particle size material is too large, a charge transfer resistance may be increased, the rate performance may be reduced, and the compaction density may also be affected. When the particle size of the first particle size material is too small, the silicon-based material contained in the silicon-carbon composite material may be reduced, thereby reducing the mass energy density of the secondary battery and also reducing the compaction density. Controlling the particle size of the first particle size material to be in a suitable range is beneficial to increasing the compaction density, reducing the resistance, and improving the rate performance of the secondary battery. In addition, the mass energy density of the secondary battery can also be improved.

In some embodiments, D2 satisfies 1 µm≤D2≤10 µm, optionally, 2 µm≤D2≤5 µm.

In some embodiments, D2 satisfies 1 µm, 1.5 µm, 2 µm, 2.5 µm, 3 µm, 3.5 µm, 4 µm, 4.5 µm, 5 µm, 6 µm, 7 µm, 8 µm, 9 µm, 10 µm, or a value in a range composed of any two of the above points.

When a particle size of the second particle size material is too large, a charge transfer resistance may be increased, the rate performance may be reduced, and the compaction density may also be affected. When the particle size of the second particle size material is too small, initial efficiency and a capacity may be low. Controlling the particle size of the second particle size material to be in a suitable range is beneficial to increasing the compaction density, reducing the resistance, and improving the rate performance of the secondary battery. In addition, the mass energy density of the secondary battery can also be improved.

In some embodiments, a particle size distribution of the negative electrode active material satisfies: 0.9≤(Dv90-Dv10)/Dv50≤2.

In some embodiments, the particle size distribution (Dv90-Dv10)/Dv50 of the negative electrode active material may be 0.9, 1, 1.2, 1.4, 1.6, 1.7, 1.8, 1.9, 2, or a value in a range composed of any two of the above points.

In some embodiments, a particle size distribution of the first particle size material satisfies: (Dv₁90-Dv₁10)/Dv₁50≤2.0, optionally 1.2≤(Dv₁90-Dv₁10)/Dv₁50≤2.0. And/or, a particle size distribution of the second particle size material satisfies: (Dv₂90-Dv₂10)/Dv₂50≤1.6, optionally 0.9≤(Dv₂90-Dv₂10)/Dv₂50≤1.3.

In some embodiments, the particle size distribution (Dv₁90-Dv₁10)/Dv₁50 of the first particle size material may be 1, 1.1, 1.2, 1.3, 1.4, 1.5, 1.6, 1.7, 1.8, 1.9, 2.0, or a value in a range composed of any two of the above points. The particle size distribution (Dv₂90-Dv₂10)/Dv₂50 of the second particle size material may be 0.6, 0.7, 0.8, 0.9, 1, 1.1, 1.2, 1.3, 1.4, 1.5, 1.6, or a value in a range composed of any two of the above points.

Dv90, Dv50, and Dv10 may be measured by using a method and a device that are well known in the art. For example, reference may be made to operations in the following steps: The negative electrode active material may have a laser particle size distribution which may be measured by using a laser particle size analyzer (Malvern Master Size 3000) with reference to the standard GB/T 19077.1-2016. The negative electrode active material is sifted through a sieve to respectively obtain the first particle size material and the second particle size material. The first particle size material and the second particle size material may have laser particle size distributions which may be measured by using a laser particle size analyzer (Malvern Master Size 3000) with reference to the standard GB/T 19077.1-2016.

When the particle size distributions of the negative electrode active material satisfy the above ranges, an overall particle size of the negative electrode active material is moderate, and the particle size distributions are uniform. This is beneficial to improving the uniformity of the overall performance of the negative electrode active material.

In some embodiments, an average length-to-width ratio R1 of the first particle size material is 1.2 to 2.5. And/or, an average length-to-width ratio R2 of the second particle size material is 1.2 to 3.0.

In some embodiments, the average length-to-width ratio R1 of the first particle size material may be 1.2, 1.3, 1.4, 1.5, 1.6, 1.7, 1.8, 2.0, 2.2, 2.4, or a value in a range composed of any two of the above points. In some embodiments, the average length-to-width ratio R2 of the second particle size material may be 1.2, 1.4, 1.6, 1.8, 2.0, 2.2, 2.4, 2.6, 2.8, 3.0, or a value in a range composed of any two of the above points.

The average length-to-width ratio of the first particle size material or the second particle size material may be measured by using a method and a device that are well known in the art, for example, by using a scanning electromicroscope (SEM). For example, reference may be made to operations in the following steps: Obtain an SEM picture that contains a specific quantity of first particle size materials through the scanning electromicroscope. Use software Image J to measure a length diameter and a width diameter of each first particle size material particle. Calculate a ratio of the length diameter to the width diameter of each first particle size material particle. Take an average value of the ratios of a plurality of first particle size material particles in the picture, to obtain R1. The "width diameter" means a shortest distance that passes through a center point of a projection image of the negative electrode active material particle and is intersected with an edge of the projection image. The "length diameter" means a longest distance that passes through a center point of a projection image of the negative electrode active material particle and is intersected with an edge of the projection image. An obtaining mode for R2 is similar to that for R1. A measurement mode for the average length-to-width ratio of the second particle size material is similar to that for the first particle size material. When R1 and R2 are large, it means that the first and second particle size materials representing the negative electrode active material are slender. If R1 and R2 are close to 1, it indicates that the first particle size material and the second particle size material tend to be ideally spherical.

By controlling the average length-to-width ratio of the first particle size material and/or the second particle size material to be in a suitable range, particle shapes of both the first particle size material and the second particle size material can be controlled to be more regular, thereby increasing the compaction density of the negative electrode film layer.

In some embodiments, the carbon matrix particle includes a three-dimensional network crosslinked pore structure, and at least a portion of the silicon-based material is arranged in the three-dimensional network crosslinked pore structure.

In the present application, the "three-dimensional network crosslinked pore structure" means that a structure in which two or more pores are interconnected or staggered and share a same pore volume is included in a pore structure formed by the carbon matrix particle.

The three-dimensional network crosslinked pore structure can provide more spaces for the silicon-based material, and can accommodate more silicon-based materials, thereby increasing the mass energy density of the secondary battery.

In some embodiments, a carbon element content of the silicon-carbon composite material has a decrease trend from a geometric center to an outer surface of the silicon-carbon composite material. And/or, a silicon element content of the silicon-carbon composite material has an increase trend from the geometric center to the outer surface of the silicon-carbon composite material.

In some embodiments, based on a total mass of the silicon-carbon composite material, the silicon element content is greater than or equal to 20%, optionally 20% to 60%. And/or, based on the total mass of the silicon-carbon composite material, the carbon element content is greater than or equal to 40%, optionally 40% to 70%. Based on the total mass of the silicon-carbon composite material, an oxygen element content is less than or equal to 10%, optionally 1% to 5%.

In some embodiments, based on the total mass of the silicon-carbon composite material, the silicon element content may be 20%, 25%, 30%, 35%, 40%, 45%, 50%, 55%, 60%, or a value in a range composed of any two of the above points. And/or, based on the total mass of the silicon-carbon composite material, the carbon element content may be 40%, 45%, *50%, 55%,* 60%, 65%, 70%, or a value in a range composed of any two of the above points. Based on the total mass of the silicon-carbon conforming material, the oxygen element content may be 1%, 2%, 3%, 4%, 5%, 6%, 7%, 8%, 9%, 10%, or a value in a range composed of any two of the above points.

The silicon element content of the silicon-carbon composite material may be measured by using a method and a device that are well known in this art, such as optical emission spectroscopy (inductively coupled plasma, ICP). For example, reference may be made to operations in the following steps: Use the silicon-carbon composite material as a sample and dissolve the sample with a strong acidic solution (such as aqua regia and hydrofluoric acid (HF)), where silicon contents of the solution at different digestion moments are distributed from the geometric center to the outer surface or from the outer surface to the geometric center. The silicon content of the completely dissolved solution is based on the total mass of the silicon-carbon composite material, which is an average silicon content.

The carbon element content of the silicon-carbon composite material may be measured by using a method and a device that are well known in the art, such as by using infrared absorption carbon-sulfur content analysis, and tested according to the GB/T20123-2006 testing standard. For example, reference may be made to operations in the following steps: Use the carbon-silicon composite material as a sample to test whether carbon contents at different moments are distributed from the geometric center to the outer surface or from the outer surface to the geometric center. A carbon content at the end of the test is an average carbon element content based on the total mass of the silicon-carbon composite material.

When the content of the silicon-based material attached to the interior of the carbon matrix particle in the present application satisfies the above range, the content of the silicon-based material is relatively high, which can significantly improve the capacity of the secondary battery, thereby increasing the mass energy density of the secondary battery. The content of the carbon matrix particle is moderate, so that a conductivity of the negative electrode active material can be improved, thereby reducing the resistance of the negative electrode plate.

In some embodiments, a mass content of the silicon-carbon composite material in the negative electrode active material is greater than or equal to 50%, optionally greater than or equal to 70%.

In some embodiments, the mass content of the silicon-carbon composite material in the negative electrode active material may be 50%, 60%, 70%, 75%, 80%, 85%, 90%, or any value in a range composed of any two of the above points.

When the content of the silicon-carbon composite material is increased, it is beneficial to increasing the mass energy density of the secondary battery.

In some embodiments, the second particle size material includes a carbon-based material. Optionally, the carbon-based material includes one or more of graphite, hard carbon, soft carbon, porous carbon, or active carbon.

In some embodiments, the second particle size material may further include one or more of a silicon-carbon material or a silicon oxide material.

In some embodiments, the silicon-carbon material includes a silicon coated carbon material, a carbon coated silicon material, a silicon-carbon material with a carbon skeleton, or a mixed material containing silicon particles and carbon particles.

When the second particle size material includes the carbon-based material, a capability of transmitting ions of the negative electrode plate can be improved, and the rate performance of the secondary battery can be effectively improved.

In some embodiments, the negative electrode plate includes a negative electrode film layer. A compaction density of the negative electrode film layer is 1.2 g/cm³ to 1.6 g/cm³. Optionally, the compaction density of the negative electrode film layer is 1.3 g/cm³ to 1.6 g/cm³.

In some embodiments, the compaction density of the negative electrode film layer may be 1.2 g/cm³, 1.25 g/cm³, 1.3 g/cm³, 1.35 g/cm³, 1.4 g/cm³, 1.45 g/cm³, 1.5 g/cm³, 1.55 g/cm³, or a value in a range composed of any two of the above points.

The compaction density of the negative electrode film layer may be measured by using a method and a device that are well known in the art. For example, the compaction density of the negative electrode film layer may be operated according to the following steps: The compaction density of the negative electrode film layer is m/(V1-V2), where m represents a weight of the negative electrode film layer; V1 represents a volume of the electrode plate; and V2 represents a volume of a current collector. The m may be obtained by subtracting the weight of the current collector from the weight of the electrode plate. A product of a surface area of the electrode plate and a thickness of the electrode plate is the volume V1 of the electrode plate, and a product of the surface area of the electrode plate and a thickness of the current collector is V2. The thickness of the current collector and the thickness of the electrode plate are obtained by measuring a thickness of an empty foil in a tab region through a micrometer.

When the compaction density of the negative electrode film layer is increased, the volumetric energy density of the secondary battery can be significantly increased.

In some embodiments, the negative electrode plate further includes a negative electrode current collector and a negative electrode film layer arranged on at least one indication of the negative electrode current collector. The negative electrode film layer includes the negative electrode active material of the present application.

In some embodiments, the negative electrode current collector may be a metal foil or a composite current collector. For example, the metal foil may be a copper foil. The composite current collector may include a polymer material substrate layer and a metal layer formed on at least one surface of the polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene (PP), polyethylene terephthalate (PET), polybutylene terephthalate (PBT), polystyrene (PS), or polyethylene (PE)).

In some embodiments, a thickness of the negative electrode current collector may be 6 µm to 20 µm. Optionally, the thickness may be 6 µm to 10 µm. In some embodiments, the thickness of the negative electrode current collector may be 7 µm, 8 µm, 9 µm, 10 µm, 12 µm, 14 µm, 16 µm, 18 µm, 20 µm, or a value in a range composed of any two of the above points.

In some embodiments, the negative electrode film layer further optionally includes a binder. The binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes another adjuvant such as a thickener (for example, sodium carboxymethyl cellulose (CMC-Na)).

In some embodiments, the negative electrode plate may be prepared by the following mode: Disperse the above components for preparing the negative electrode plate, for example, the negative electrode active material, the conductive agent, the binder, and any other components, in a solvent (for example, deionized water) to form a negative electrode slurry. Coat a negative electrode current collector with the negative electrode slurry, and obtain the negative electrode plate after drying, cold pressing, and other procedures.

### [Positive electrode plate]

The positive electrode plate includes a positive electrode current collector and a positive electrode active material layer arranged on at least one surface of the positive electrode current collector. The positive electrode active material layer includes a positive electrode active material.

For example, the positive electrode current collector has two surfaces opposite to each other in a thickness direction of the positive electrode current collector, and the positive electrode active material layer is arranged on either or both of the two opposite surfaces of the positive electrode current collector.

In some examples, the positive electrode current collector may use a metal foil or a composite current collector. For example, the metal foil may be an aluminum foil. The composite current collector can include a polymer material substrate layer and a metal layer formed on at least one surface of the polymer material substrate layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some examples, the positive electrode active material may be a positive electrode active material used for a battery, which is well known in the art. For example, the positive electrode active material may include at least one of the following materials: a lithium-containing phosphate of an olivine structure, a lithium transition metal oxide, and their respective modified compounds. However, the present application is not limited to such materials, and may alternatively use another conventional material that may be used as a positive electrode active material for batteries. Only one or a combination of two or more of these positive electrode active materials may be used. Examples of the lithium transition metal oxide may include but are not limited to at least one of: a lithium-cobalt oxide (e.g. LiCoO₂), a lithium-nickel oxide (e.g. LiNiO₂), a lithium-manganese oxide (e.g. LiMnO₂ and LiMn₂O₄), a lithium-nickel-cobalt oxide, a lithium-manganese-cobalt oxide, a lithium-nickel-manganese oxide, a lithium-nickel-cobalt-manganese oxide (e.g. LiNi_{1/3}Co_{1/3}Mn_{1/3}O₂, or referred to as NCM333), LiNi_{0.5}Co_{0.2}Mn_{0.3}O₂ (or referred to as NCM523), LiNi_{0.5}Co_{0.25}Mn_{0.25}O₂ (or referred to as NCM211), LiNi_{0.6}Co_{0.2}Mn_{0.2}O₂ (or referred to as NCM622), LiNi_{0.8}Co_{0.1}Mn_{0.1}O₂ (or referred to as NCM811), a lithium-nickel-cobalt-aluminum oxide (e.g. LiNi_{0.85}Co_{0.15}Al_{0.05}O₂), and modified compounds thereof. An example of the lithium-containing phosphate of the olivine structure may include, but is not limited to, at least one of lithium iron phosphate (for example, LiFePO4 (also referred to as LFP)), a composite material of lithium iron phosphate and carbon, lithium manganese phosphate (for example, LiMnPO4), a composite material of lithium manganese phosphate and carbon, lithium iron manganese phosphate, and a composite material of lithium manganese iron phosphate and carbon.

In some embodiments, the positive active material may include: at least one of a lithium transition metal oxide of LiₐNi_{b}Co_{c}M_{d}OₑA_{f} and a modified compound thereof, where 0<a≤1.2, 0.5≤b<1, 0<c<1, 0<d<1, 0<e≤2, 0≤f≤1. M includes at least one of Mn, Al, Zr, Zn, Cu, Cr, Mg, Fe, V, Ti, and B. A includes at least one of N, F, S, and Cl.

The above modified compound may be a compound obtained by performing doping modification and/or coating modification on the lithium transition metal oxide.

In some examples, the positive electrode film layer may further optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some examples, the positive electrode active material layer may further optionally include a conductive agent. For example, the conductive agent may include at least one of superconducting carbon, acetylene black, carbon black, Ketjen black, carbon dots, carbon nanotubes, graphene, and carbon nanofibers.

In some examples, the positive electrode plate may be prepared by the following mode: Disperse the above components for preparing the positive electrode plate, for example, the positive electrode active material, the conductive agent, the binder, and any other components, in a solvent (for example, N-methylpyrrolidone) to form a positive electrode slurry. Coat a positive electrode current collector with the positive electrode slurry, and obtain the positive electrode plate after drying, cold pressing, and other procedures.

### [Electrolyte]

The electrolyte plays a role in conducting ions between the positive electrode plate and negative electrode plate. A type of the electrolyte is not specifically limited in the present application, and may be selected according to requirements. For example, the electrolyte may be liquid, gelled, or all solid.

In some embodiments, the electrolyte uses an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution optionally includes an additive. For example, the additive may include a negative electrode film forming additive, a positive electrode film forming additive, and may further include an additive that can improve particular battery performance, for example, an additive that improves battery overcharging performance, an additive that improves high or low temperature performance of the battery, or the like.

### [Separator]

In some embodiments, the secondary battery further includes a separator. The type of the separator is not particularly limited in the present application, and any well-known separator with a porous structure having good chemical stability and mechanical stability may be selected.

In some embodiments, a material of the separator may be at least one of a glass fiber, a non-woven fabric, polyethylene, polypropylene, or polyvinylidene fluoride. The separator may be a single-layer film or a multilayer composite film without special limitations. When the separator is the multilayer composite film, materials of layers may be the same or different without special limitations.

### [Method for preparing secondary battery]

In some embodiments, the positive electrode plate, the negative electrode plate, and the separator may be made into an electrode assembly by a winding process or a lamination process.

In some embodiments, an outer package of the secondary battery may be a hard shell, such as a hard plastic case, an aluminum case, a steel case, or the like. The outer packaging of the secondary battery may alternatively be a soft package such as a pouch-type soft package. A material of the soft package may be plastic, and examples of plastic may include polypropylene, polybutylene terephthalate, polybutylene succinate, and the like.

A shape of the secondary battery is not particularly limited in the present application, and the secondary battery may be cylindrical, square, or in any other shape. For example, FIG. 2 is a secondary battery 5 of a square structure as an example.

In some embodiments, referring to FIG. 3, the outer package may include a case 51 and a cover plate 53. The case 51 may include a bottom plate and a side plate connected to the bottom plate, and an accommodating cavity is enclosed by the bottom plate and the side plate. The case 51 has an opening that is communicated with the accommodating cavity, and the cover plate 53 may cover the opening to close the accommodating cavity. The positive electrode plate, the negative electrode plate, and the separator may form an electrode assembly 52 through a winding process or a lamination process. The electrode assembly 52 is enclosed in the accommodating cavity. An electrolytic solution infiltrates into the electrode assembly 52. The secondary battery 5 may include one or more electrode assemblies 52, which may be selected by those skilled in the art according to specific actual requirements.

In some embodiments, a mass energy density of the secondary battery is 380 Wh/kg to 460 Wh/kg. Optionally, the mass energy density of the secondary battery is 400 Wh/kg to 460 Wh/kg. And/or, a volumetric energy density of the secondary battery is 650 Wh/L to 1000 Wh/L. Optionally, the volumetric energy density of the secondary battery is 700 Wh/L to 1000 Wh/L.

The mass energy density and volumetric energy density of the secondary battery may be measured by using a method and a device that are commonly used in the art. For example, for the mass energy density of the secondary battery, reference may be made to operations in the following steps: Place the secondary battery on an electronic balance until the weight is stabilized, and read a weight value M0 of the secondary battery. Charge the secondary battery to a charging cut-off voltage (e.g. 4.25 V) at a specific rate (e.g. 0.33 C) under a specific temperature (e.g. 25°C). Continue to perform constant voltage charging at this charging cut-off voltage until current reaches 0.05 C. End the charging (C represents a rated capacity of the secondary battery). Discharge the secondary battery at a specific rate (0.33 C) under a specific temperature (e.g. 25°C) to a discharge cut-off voltage (e.g. 2.0 V). Record a discharge capacity C0 discharged by the secondary battery, where a total discharge energy is E0. Mass energy density of secondary battery is equal to discharge energy E0 of secondary battery divided by weight M0 of secondary battery. For example, for volume area energy of the secondary battery, reference may be made to operations in the following steps: Measure a length, width, and height of the secondary battery by using a scale, to obtain a volume value V0 of the secondary battery. Measure the total discharge capacity E0 of the secondary battery. Volumetric energy density of secondary battery is discharge energy E0 of secondary battery divided by volume V0 of secondary battery.

In some embodiments, the mass energy density of the secondary battery may be 380 Wh/kg, 390 Wh/kg, 400 Wh/kg, 410 Wh/kg, 420 Wh/kg, 430 Wh/kg, 440 Wh/kg, 450 Wh/kg, 460 Wh/kg, or a value in a range composed of any two of the above points. In some embodiments, the volumetric energy density of the secondary battery may be 650 Wh/L, 700 Wh/L, 800 Wh/L, 900 Wh/L, 950 Wh/L, 1000 Wh/L, or a value in a range composed of any two of the above points.

### [Battery module]

In some embodiments, the secondary battery may be assembled into a battery module. The battery module may include one or more secondary batteries, and the exact number may be selected by those skilled in the art based on usage and capacity of the battery module.

FIG. 4 is a battery module 4 as an example. Referring to FIG. 4, in the battery module 4, a plurality of secondary batteries 5 may be sequentially arranged in a length direction of the battery module 4. Certainly, the secondary batteries may be arranged in any other way. The plurality of secondary batteries 5 may further be fixed by fasteners.

Optionally, the battery module 4 may further include a shell with an accommodating space, and the plurality of secondary batteries 5 are accommodated in the accommodating space.

### [Battery pack]

In some embodiments, the above battery module may further be assembled into a battery pack. The battery pack may include one or more battery modules, and the exact number may be selected by those skilled in the art based on usage and capacity of the battery pack.

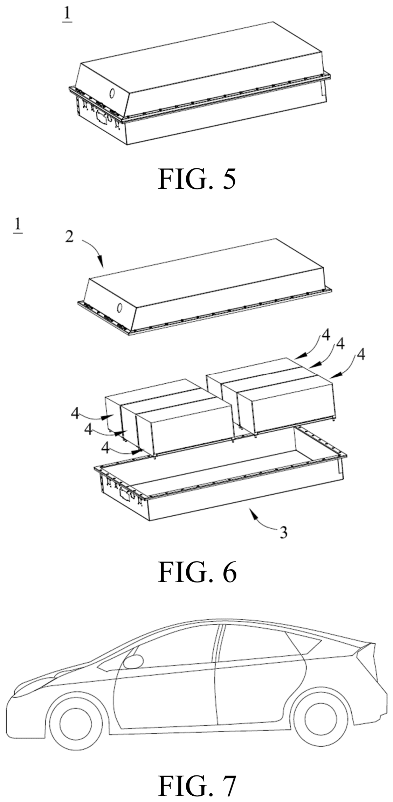

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box 2 and a lower box 3. The upper box 2 may cover the lower box 3 to form a closed space for accommodating the battery modules 4. The plurality of battery modules 4 may be arranged in the battery box in any way.

### [Power consuming apparatus]

A second aspect of the present application provides a power consuming apparatus. The power consuming apparatus includes the secondary battery according to the present application.

The power consuming apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the power consuming apparatus, the secondary battery, the battery module, or the battery pack may be selected according to usage requirements.

FIG. 7 is a power consuming apparatus as an example. The power consuming apparatus is an all-electric vehicle, a hybrid electric vehicle, a plug-in hybrid electric vehicle, or the like. To meet the requirements of the power consuming apparatus for high power and a high energy density of a secondary battery, a battery pack or a battery module may be used.

The apparatus used as another example may be, for example, a mobile phone, a tablet computer, a laptop computer, or the like. The apparatus is generally required to be light and thin, and may use a secondary battery as a power source.

### Example

Examples of the present application will be described hereinafter. The examples described below are exemplary and only used to explain the present application, and should not be construed as a limitation on the present application. If the specific technology or conditions are not specified in the examples, the technology or conditions described in the literature in the art or the product manual shall be followed. The used reagents or instruments without manufacturer indicated are all conventional products that may be purchased in the market.

### Example 1

### I. Preparation method

### 1. Preparation of a positive electrode plate

Uniformly mix lithium nickel cobalt manganese oxide LiNi_{0.8}Co_{0.1}Mn_{0.1}O₂ serving as a positive electrode active material, polyvinylidene fluoride (PVDF) serving as a binder, and conductive carbon black (Super P) serving as a conductive agent according to a mass ratio of 96%: 2%: 2% in an N-methylpyrrolidone (NMP) solvent to prepare a positive electrode slurry. Coat a surface of an aluminum foil with the positive electrode slurry, and dry the surface. Perform cold pressing to prepare the positive electrode plate.

### 2. Preparation of a negative electrode plate

Preparation of a silicon-carbon composite material: Prepare a carbon matrix particle with a three-dimensional network crosslinked pore structure by a template method. Specifically, use an SiO₂ molecular sieve as a template agent and use sucrose as a carbon source. Remove a template through liquid-phase mixing, drying, high-temperature carbonization, and acid treatment, to obtain the carbon matrix particle. Use silane as a silicon precursor. Attach the silicon precursor to the three-dimensional network crosslinked pore structure by chemical vapor deposition, to obtain the silicon-carbon composite material, where an average particle size D1 of the obtained silicon-carbon composite material is 14 µm; an average length-to-width ratio R1 is 1.5; and a particle size distribution (Dv₁90-Dv₁10)/Dv₁50 is 1.8.

Fully stir and mix the silicon-carbon composite material serving as a first particle size material and synthetic graphite serving as a second particle size material (a mass ratio of which is 90%: 10%, i.e. α=9), carbon black serving as a conductive agent, styrene butadiene rubber (SBR) serving as a binder, and carboxymethyl cellulose sodium (CMC) serving as a thickener at a mass ratio of 93.5%: 1.8%: 3.5%: 1.2% in an appropriate amount of deionized water to form a uniform negative electrode slurry. Coat a negative electrode current collector with the negative electrode slurry, and obtain a negative electrode after other procedures such as drying, where an average particle size D2 of the synthetic graphite is 3.5 µm. The average length-to-width ratio R2 is 1.3. The particle size distribution (Dv₂90-Dv₂10)/Dv₂50 is 1.2.

### 3. Separator

A polyethylene (PE) film is used as a separator.

### 4. Electrolytic solution

Mix ethylene carbonate, ethyl methyl carbonate, and diethyl carbonate according to a volume ratio of 1: 1: 1, to obtain an organic solvent. Dissolve fully dried lithium salt LiPF₆ in the mixed organic solvent, to prepare an electrolytic solution with a concentration of 1 mol/L.

### 5. Preparation of a battery

Wind or laminate the above positive electrode plate, the separator, and the negative electrode plate sequentially, to obtain an electrode assembly. Place the electrode assembly in a packaging case. Inject the electrolytic solution after the electrode assembly is dried. After vacuum packaging, standing, formation, shaping, and other procedures, obtain a lithium-ion secondary battery. For specific parameters, see Table 1.

### Example 2 to Example 18

The preparation method is similar to Example 1, except that: a corresponding secondary battery is obtained by adjusting relevant parameters of the first particle size material and the second particle size material or adjusting the type of the second particle size material. For specific parameters, see Table 1 for detail.

### Comparative example 1

The preparation method is similar to Example 1, except that a corresponding secondary battery is obtained by adjusting the average particle sizes of the first particle size material and the second particle size material. For specific parameters, see Table 1 for detail.

### II. Performance test

### 1. Battery performance test

### 1.1 Test on mass energy density and volumetric energy density

### 1) A method for measuring the discharge energy of a secondary battery is as follows:

Place the secondary battery on an electronic balance until the weight is stabilized, and read a weight value M0 of the secondary battery.

Measure a length, width, and height of the secondary battery by using a scale, and perform calculation to obtain a volume value V0 of the secondary battery.

Charge the secondary battery to a charging cut-off voltage of 4.25 V at 0.33 C and 25°C. Continue to perform constant voltage charging at this charging cut-off voltage until current reaches 0.05 C. End the charging (where C represents a rated capacity of the secondary battery).

Discharge the secondary battery at 0.33 C and 25°C to a discharge cut-off voltage of 2.0 V. Record a total discharge capacity C0 of the secondary battery, where a total discharge energy is E0.

Mass energy density of secondary battery is equal to discharge energy E0 of secondary battery divided by weight M0 of secondary battery.

Volumetric energy density of secondary battery is discharge energy E0 of secondary battery divided by volume V0 of secondary battery.

### 1.2. Rate performance

At 25°C, fully charge the battery at 0.33 C and fully discharge the battery at 1 C for 10 times. Then, fully charge the battery at 2 C, and disassemble the negative electrode plate, and observe lithium deposition on a surface of the negative electrode plate. If there is no lithium deposited on the surface of the negative electrode, gradually increase the charging rate 2 C according to 0.1 C to carry out a test again until lithium is deposited on the negative electrode. Stop the test, and subtract 0.1 C from the charging rate at this time to obtain a maximum charging rate of the battery.

### III. Analysis of test results of Examples and comparative examples

The batteries in the examples and the comparative examples are respectively prepared according to the above methods, and performance parameters are measured. For the parameters of the negative electrode plate, see Table 1 below. For performance test results of the negative electrode plate and the secondary battery, see Table 2 below.

| Table 1 Parameters of the negative electrode plate | | | | | | | | | | | | |
|---|---|---|---|---|---|---|---|---|---|---|---|---|
| Serial number | First particle size material | | | | Second particle size material | | | | Gradation relationship between the first particle size material and the second particle size material | | | Negative electrode active material |
| | Material | D1 (µm) | R1 | (Dv₁90-Dv₁10)/ Dv₁50 | Material | D2 (µm) | R2 | (DV₂90-DV₂10)/ DV₂50 | D2/ D1 | α | 0.6-0.155 lnα | (Dv90-Dv10)/ Dv50 |
| Example 1 | Silicon-carbon composite material | 14 | 1.5 | 1.8 | Synthetic graphite | 3.5 | 1.3 | 1.2 | 0.25 | 9 | 0.26 | 1.7 |
| Example 2 | Silicon-carbon composite material | 14 | 1.5 | 1.8 | Synthetic graphite | 3.5 | 1.3 | 1.2 | 0.25 | 15 | 0.18 | 1.7 |
| Example 3 | Silicon-carbon composite material | 14 | 1.5 | 1.8 | Synthetic graphite | 3.5 | 1.3 | 1.2 | 0.25 | 1.5 | 0.54 | 1.7 |
| Example 4 | Silicon-carbon composite material | 14 | 1.5 | 1.8 | Synthetic graphite | 3.5 | 1.3 | 1.2 | 0.25 | 3 | 0.42 | 1.7 |
| Example 5 | Silicon-carbon composite material | 15 | 1.5 | 1.8 | Synthetic graphite | 2 | 1.3 | 1.2 | 0.13 | 9 | 0.25 | 1.7 |
| Example 6 | Silicon-carbon composite material | 20 | 1.5 | 1.8 | Synthetic graphite | 4 | 1.3 | 1.2 | 0.20 | 9 | 0.25 | 1.7 |
| Example 7 | Silicon-carbon composite material | 5 | 1.5 | 1.8 | Synthetic graphite | 1 | 1.3 | 1.2 | 0.20 | 9 | 0.25 | 1.7 |
| Example 8 | Silicon-carbon composite material | 30 | 1.5 | 1.8 | Synthetic graphite | 7 | 1.3 | 1.2 | 0.23 | 9 | 0.25 | 1.7 |
| Continued Table 1 | | | | | | | | | | | | |

| Serial number | First particle size material | | | | Second column diameter material | | | | Gradation relationship between the first particle size material and the second particle size material | | | Negative electrode active material |
|---|---|---|---|---|---|---|---|---|---|---|---|---|
| | Material | D1 (µm) | R1 | (Dv₁90-Dv₁10)/ Dv₁50 | Material | D2 (µm) | R2 | (DV₂90-DV₂10)/ DV₂50 | D2/ D1 | α | 0.6-0.155 lnα | (Dv90-Dv10)/ Dv50 |
| Example 9 | Silicon-carbon composite material | 14 | 1.2 | 1.8 | Synthetic graphite | 3.5 | 1.2 | 1.2 | 0.25 | 9 | 0.25 | 1.7 |
| Example 10 | Silicon-carbon composite material | 14 | 2.5 | 1.8 | Synthetic graphite | 3.5 | 3 | 1.2 | 0.25 | 9 | 0.25 | 1.7 |
| Example 11 | Silicon-carbon composite material | 14 | 1 | 1.8 | Synthetic graphite | 3.5 | 1.1 | 1.2 | 0.25 | 9 | 0.25 | 1.7 |
| Example 12 | Silicon-carbon composite material | 14 | 3 | 1.8 | Synthetic graphite | 3.5 | 3.5 | 1.2 | 0.25 | 9 | 0.25 | 1.7 |
| Example 13 | Silicon-carbon composite material | 14 | 1.5 | 1.2 | Synthetic graphite | 3.5 | 1.3 | 0.9 | 0.25 | 9 | 0.25 | 0.9 |
| Example 14 | Silicon-carbon composite material | 14 | 1.5 | 2 | Synthetic graphite | 3.5 | 1.3 | 1.3 | 0.25 | 9 | 0.25 | 2 |
| Example 15 | Silicon-carbon composite material | 14 | 1.5 | 1.1 | Synthetic graphite | 3.5 | 1.3 | 0.8 | 0.25 | 9 | 0.25 | 0.8 |
| Example 16 | Silicon-carbon composite material | 14 | 1.5 | 2.1 | Synthetic graphite | 3.5 | 1.3 | 1.4 | 0.25 | 9 | 0.25 | 2.1 |
| Example 17 | Silicon-carbon composite material | 14 | 1.5 | 1.8 | Synthetic graphite+ silicon oxide material | 3.5 | 1.3 | 1.2 | 0.25 | 9 | 0.25 | 1.7 |
| Continued Table 1 | | | | | | | | | | | | |

| Serial number | First particle size material | | | | Second particle size material | | | | Gradation relationship between the first particle size material and the second particle size material | | | Negative electrode active material |
|---|---|---|---|---|---|---|---|---|---|---|---|---|
| | Material | D1 (µm) | R1 | (Dv₁90-Dv₁10)/ DV₁50 | Material | D2 (µm) | R2 | (Dv₂90-Dv₂10)/ Dv₂50 | D2/ D1 | α | 0.6-0.155 lnα | (Dv90-Dv10)/ Dv50 |
| Example 18 | Silicon-carbon composite material | 14 | 1.5 | 1.8 | Synthetic graphite-silicon-carbon composite material | 3.5 | 1.3 | 1.2 | 0.25 | 9 | 0.25 | 1.7 |
| Comparative example 1 | Silicon-carbon composite material | 14 | 1.5 | 1.8 | Synthetic graphite | 10 | 1.3 | 1.2 | 0.71 | 9 | 0.25 | 1.7 |

**Table 2 Performance test results of the negative electrode plate and the secondary battery**

| Serial number | Compaction density (g/cm³) of the negative electrode film layer | Mass energy density (Wh/kg) | Volumetric energy density (wh/L) | Maximum charging rate | Negative electrode plate resistance (Ω) |
|---|---|---|---|---|---|
| Example 1 | 1.30 | 460 | 1000 | 4.3 C | 0.0171 |
| Example 2 | 1.10 | 443 | 782 | 2.7 C | 0.0433 |
| Example 3 | 1.50 | 419 | 933 | 4.5 C | 0.0131 |
| Example 4 | 1.40 | 425 | 924 | 4.4 C | 0.0156 |
| Example 5 | 1.29 | 453 | 980 | 3.4 C | 0.0195 |
| Example 6 | 1.28 | 424 | 846 | 3.1 C | 0.0253 |
| Example 7 | 1.23 | 419 | 816 | 4.1 C | 0.0173 |
| Example 8 | 1.21 | 417 | 715 | 2.9 C | 0.0352 |
| Example 9 | 1.29 | 412 | 808 | 3.9 C | 0.0176 |
| Example 10 | 1.22 | 441 | 923 | 4.0 C | 0.0174 |
| Example 11 | 1.15 | 413 | 715 | 3.5 C | 0.0190 |
| Example 12 | 1.12 | 403 | 702 | 4.2 C | 0.0172 |
| Example 13 | 1.27 | 422 | 846 | 3.6 C | 0.0186 |
| Example 14 | 1.24 | 419 | 795 | 3.7 C | 0.0179 |
| Example 15 | 1.14 | 411 | 713 | 3.8 C | 0.0177 |
| Example 16 | 1.13 | 405 | 700 | 3.2 C | 0.0207 |
| Example 17 | 1.26 | 445 | 942 | 3.0 C | 0.0303 |
| Example 18 | 1.25 | 450 | 962 | 3.3 C | 0.0203 |
| Comparative Example 1 | 1.05 | 396 | 680 | 2.8 C | 0.0406 |

According to the results in the table above, it can be seen from Comparative example 1 and Example 1 to Example 18 that by adding the second particle size material into the negative electrode active material and limiting the relationship between the average particle size of the first particle size material and the average particle size of the second particle size material within the range of the present application, the compaction density of the negative electrode film layer can be increased; the resistance can be reduced; the mass energy density of the secondary battery can be increased; and the volumetric energy density and rate performance of the secondary battery are further improved.

It can be seen according to Example 1 to Example 4 that by further defining the relationship between the average particle size and mass of the first particle size material and the average particle size and mass of the second particle size material, it is beneficial for the secondary battery to have both a high compaction density and a high mass energy density, thereby achieving a higher volumetric energy density, lower resistance, and higher rate performance.

It can be seen according to Example 1 and Example 5 to Example 8, limiting the average particle sizes of the first particle size material and the second particle size material to be in the ranges of the present application is beneficial to increasing the compaction density, reducing the resistance, and improving the rate performance of the secondary battery. In addition, the mass energy density of the secondary battery can also be improved.

It can be seen according to Example 9 to Example 12 that limiting the length-to-width ratios of the first particle size material and the second particle size material to be in the ranges of the present application is beneficial to increasing the compaction density of the film layer.

It can be seen according to Example 1 and Example 13 to Example 16 that limiting the particle size distributions of the negative electrode active material, the first particle size material, and the second particle size material to be in the ranges of the present application is beneficial to increasing the compaction density of the negative electrode film layer.

It should be noted that, the present application is not limited to the embodiments above. The above embodiments are merely exemplary, and embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

## Claims

1. A secondary battery, comprising a negative electrode plate, wherein the negative electrode plate comprises a negative electrode active material; the negative electrode active material comprises a first particle size material and a second particle size material; an average particle size D1 of the first particle size material and an average particle size D2 of the second particle size material satisfy: D2/D1≤0.6, and the first particle size material comprises a silicon-carbon composite material; and the silicon-carbon composite material comprises a carbon matrix particle and a silicon-based material arranged inside the carbon matrix particle.

2. The secondary battery according to claim 1, wherein D2/D1≤0.6-0.155 lnα, wherein α is a mass ratio of the first particle size material to the second particle size material, and α≥1.

3. The secondary battery according to claim 2, wherein 3≤α≤9.

4. The secondary battery according to any one of claims 1 to 3, wherein 5 µm≤D1≤20 µm, optionally 5 µm≤D1≤15 µm.

5. The secondary battery according to any one of claims 1 to 4, wherein 1 µm≤D2≤10 µm, optionally 2 µm≤D2≤5 µm.

6. The secondary battery according to any one of claims 1 to 5, wherein a particle size distribution of the negative electrode active material satisfies: 0.9≤(Dv90-Dv10)/Dv50≤2.

7. The secondary battery according to any one of claims 1 to 6, wherein a particle size distribution of the first particle size material satisfies: (Dv₁90-Dv₁10)/Dv₁50≤2.0, optionally 1.2≤(Dv₁90-Dv₁10)/Dv₁50≤2.0; and/or, a particle size distribution of the second particle size material satisfies: (Dv₂90-Dv₂10)/Dv₂50≤1.6, optionally 0.9≤(Dv₂90-Dv₂10)/Dv₂50≤1.3.

8. The secondary battery according to any one of claims 1 to 7, wherein an average length-to-width ratio R1 of the first particle size material is 1.2 to 2.5; and/or, an average length-to-width ratio R2 of the second particle size material is 1.2 to 3.0.

9. The secondary battery according to any one of claims 1 to 8, wherein the carbon matrix particle comprises a three-dimensional network crosslinked pore structure, and at least a portion of the silicon-based material is arranged in the three-dimensional network crosslinked pore structure.

10. The secondary battery according to any one of claims 1 to 9, wherein a carbon element content of the silicon-carbon composite material has a decrease trend from a geometric center to an outer surface of the silicon-carbon composite material; and/or, a silicon element content of the silicon-carbon composite material has an increase trend from the geometric center to the outer surface of the silicon-carbon composite material;

11. The secondary battery according to claim 10, wherein
based on a total mass of the silicon-carbon composite material, the silicon element content is greater than or equal to 20%, optionally 20% to 60%; and/or,
based on the total mass of the silicon-carbon composite material, the carbon element content is greater than or equal to 40%, optionally 40% to 70%; and
based on the total mass of the silicon-carbon composite material, an oxygen element content is less than or equal to 10%, optionally 1% to 5%.

12. The secondary battery according to any one of claims 1 to 11, wherein a mass content of the silicon-carbon composite material in the negative electrode active material is greater than or equal to 50%, optionally greater than or equal to 70%.

13. The secondary battery according to any one of claims 1 to 12, wherein the second particle size material comprises a carbon-based material; and optionally, the carbon-based material comprises one or more of graphite, hard carbon, soft carbon, porous carbon, or active carbon.

14. The secondary battery according to any one of claims 1 to 13, wherein the negative electrode plate comprises a negative electrode film layer, wherein a compaction density of the negative electrode film layer is 1.2 g/cm³ to 1.6 g/cm³, and optionally, the compaction density of the negative electrode film layer is 1.3 g/cm³ to 1.6 g/cm³.

15. The secondary battery according to any one of claims 1 to 14, wherein
a mass energy density of the secondary battery is 380 Wh/kg to 460 Wh/kg, optionally, the mass energy density of the secondary battery is 400 Wh/kg to 460 Wh/kg; and/or, a volumetric energy density of the secondary battery is 650 Wh/L to 1000 Wh/L, optionally, the volumetric energy density of the secondary battery is 700 Wh/L to 1000 Wh/L.

16. A power consuming apparatus, comprising the secondary battery according to any one of claims 1 to 15.
